Europäisches Patentamt

European Patent Office

Office européen des brevets

(11) Numéro de publication: **0 466 955 A1**

## DEMANDE DE BREVET EUROPEEN

(21) Numéro de dépôt: **90113716.6**

(22) Date de dépôt: **18.07.90**

(51) Int. Cl.5: **A23F 5/26**

(43) Date de publication de la demande:
**22.01.92 Bulletin 92/04**

(84) Etats contractants désignés:
**AT BE CH DE DK ES FR GB GR IT LI LU NL SE**

(71) Demandeur: **SOCIETE DES PRODUITS NESTLE S.A.**
**Case postale 353**
**CH-1800 Vevey(CH)**

(72) Inventeur: **Schlecht, Klaus**
**Chemin Pierrefleur 3**
**CH-1350 Orbe(CH)**

(54) **Procédé et dispositif pour la production de café instantané soluble en poudre.**

(57) Dans un dispositif d'extraction de café constitué de six cellules d'extraction (1,2,3,4,5,6), sont prévues, après des cellules chaudes (1,2), des moyens (7) pour réduire la vitesse de percolation dans au moins une cellule (3) en aval des dites cellules chaudes. En particulier les moyens (7) sont constitués par un évaporateur. Après au moins une cellule (3), où la vitesse de percolation a été réduite, sont prévus des moyens (8) pour réguler le débit de percolation dans les cellules en aval.

Application à la production de café instantané soluble en poudre.

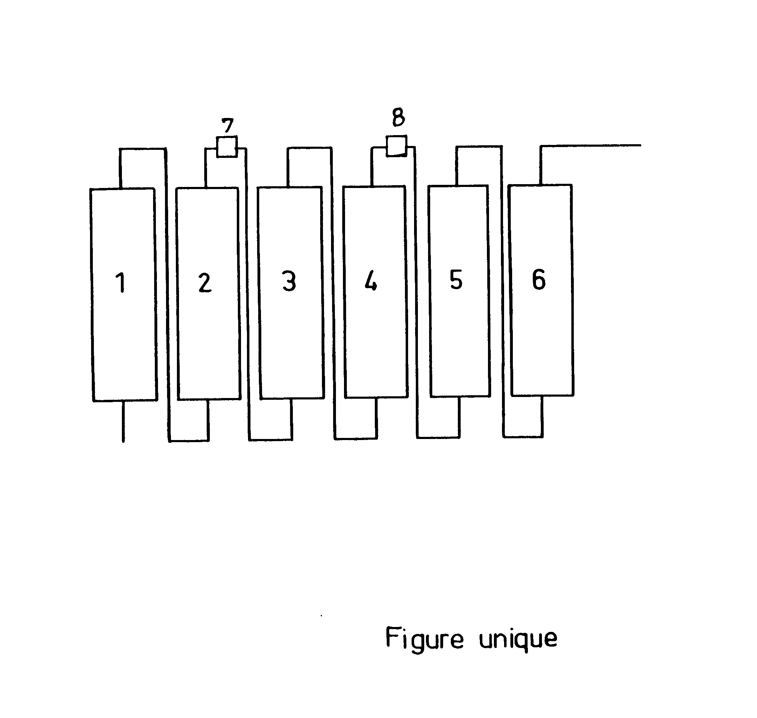

Figure unique

La présente invention est relative à un procédé et un dispositif pour la production de café instantané soluble en poudre.

La poudre de café soluble est classiquement produite par lyophilisation ou atomisation après l'évaporation d'un extrait de café obtenu par la percolation d'un liquide d'extraction à travers des cellules remplies de café torréfié moulu (Sivetz - Coffee Processing Technology - volume 1 - pages 262, 263 - AVI - 1963).

L'extraction est réalisée à contre courant, c'est-à-dire que de l'eau, sous pression à une température pouvant être comprise entre 150˚ C et 180˚ C, est introduite dans la cellule contenant la charge de café torréfié moulu qui a été la plus épuisée en ayant subi N extractions, à la base de celle-ci. L'extrait liquide de cette cellule d'extraction est ensuite amené à traverser la cellule d'extraction contenant la charge de café ayant servi (N-1) fois, cela ainsi de suite jusqu'à ce que l'extrait liquide traverse la cellule qui vient d'être remplie de café torréfié moulu frais.

L'extrait final sort de cette dernière cellule à une température de l'ordre de 100˚ C.

Ainsi, le café le plus épuisé est soumis à la température la plus élevée alors que le café frais est soumis à la température la plus basse.

On distingue classiquement les cellules chaudes, qui contiennent le café le plus épuisé, des cellules froides, qui contiennent le café le moins épuisé.

A la fin de chaque cycle d'extraction, on vide la cellule contenant le café le plus épuisé, on la remplit de café frais et, après avoir relié convenablement les cellules entre elles, un nouveau cycle d'extraction commence.

Bien que l'extrait final obtenu à la sortie de la cellule d'extraction contenant le café le plus frais ne présente qu'une faible quantité de particules de café moulu, des fines étant toujours entraînées il est nécessaire de filtrer cet extrait.

Enfin, après cette phase de filtration qui élimine les particules supérieures à environ 1 mm, il existe encore des matières solides en suspension telles que des polysaccharides ou des protéines qui doivent être éliminées afin de permettre, après évaporation et lyophilisation ou atomisation de cet extrait, d'obtenir une poudre de café parfaitement soluble et n'engendrant pas l'apparition de matières solides dans la tasse.

Ces matières solides en suspension sont classiquement éliminées par centrifugation, la boue obtenue étant ensuite décantée, le liquide de décantation surnageant étant réintroduit dans l'extrait final filtré alors que le résidu solide obtenu est éliminé.

Ce procédé présente comme inconvénient principal de générer une boue qu'il faut retraiter par décantation et dont la manipulation n'est pas aisée.

Par ailleurs, la centrifugation ne permet pas toujours d'éliminer de façon satisfaisante les matières en suspension.

La demanderesse s'est donc posé le problème de proposer un procédé de production de café soluble instantané en poudre dans lequel l'extraction en phase liquide du café permet de réduire la teneur en matières insolubles dans l'extrait final.

La présente invention a donc plus particulièrement pour objet un procédé de production de café instantané soluble en poudre dans lequel un liquide d'extraction est amené à percoler à travers des cellules remplies de café torréfié moulu, l'extrait liquide final étant ensuite transformé en poudre, procédé dans lequel, après des cellules chaudes contenant le café le plus épuisé, la vitesse de percolation de l'extrait liquide à travers des cellules d'extraction est réduite.

Grâce à cette réduction de la vitesse de percolation à travers des cellules d'extraction, ces cellules se comportent alors comme des filtres qui, retenant les matières en suspension, permettent d'obtenir un extrait final présentant une fraction non soluble très réduite par rapport à l'art antérieur.

La présente invention a aussi pour objet un procédé du type ci-avant dans lequel, après la réduction de vitesse de percolation, en aval des cellules où cette réduction a lieu, le débit de percolation est régulé pour atteindre l'épuisement désiré.

Un autre objet de la présente invention est un dispositif pour la mise en oeuvre du procédé ci-avant dans lequel, après les cellules chaudes contenant le café le plus épuisé, sont prévus des moyens pour réduire la vitesse de percolation dans au moins une cellule en aval des dites cellules chaudes.

Un autre objet de la présente invention est un dispositif du type ci-dessus dans lequel après au moins une cellule où la vitesse de percolation a été réduite, sont prévus des moyens pour réguler le débit de percolation dans les cellules contenant le café torréfié le plus frais en fonction de l'épuisement désiré.

D'autres caractéristiques et avantages ressortiront à la suite de la description qui va suivre faite en référence à la figure annexée unique donnée seulement à titre d'exemple non limitatif et qui représente un schéma d'un dispositif pour la mise en oeuvre du procédé selon l'invention.

Comme on le voit à la figure unique, un dispositif d'extraction de café peut être constitué de plusieurs cellules d'extraction, fonctionnant en série, constituées chacune d'une colonne dont la partie inférieure est reliée à la partie supérieure de la colonne qui la précède et dont la partie supérieure est reliée à la partie inférieure de la colonne qui la suit.

Généralement un dispositif d'extraction est constitué de quatre à huit cellules d'extraction et, préférentiellement, de six cellules d'extraction.

La cellule 1 contient le café le plus épuisé tandis que la cellule 6 contient le café le moins épuisé, le niveau d'épuisement diminuant de la cellule 1 vers la cellule 6.

Le liquide d'extraction, qui peut être constitué par de l'eau sous pression à une température comprise entre 150°C et 180°C, arrive par le bas de la cellule 1, traverse cette cellule de bas en haut en se chargeant en produit soluble, ressort à la partie supérieure de la cellule 1 et traverse successivement chacune des cellules jusqu'à traverser la cellule 6 qui est la dernière cellule et qui contient du café torréfié moulu frais.

A la sortie de la cellule 6 est donc obtenu l'extrait final qui va ensuite être filtré et éventuellement centrifugé puis évaporé et enfin transformé en poudre par lyophilisation ou atomisation.

Le paramètre essentiel à prendre en compte pour la compréhension de l'invention réside dans la vitesse de percolation de l'extrait liquide à travers une cellule d'extraction.

Cette vitesse de percolation doit être comprise comme étant le rapport entre le débit d'extrait liquide, exprimé par exemple en litres par minute, et la section de la cellule d'extraction, la grandeur obtenue étant dimensionnellement assimilable à une vitesse.

On comprend ainsi que, pour un même débit, une vitesse de percolation peut varier considérablement d'une cellule d'extraction à une autre si les sections de ces cellules sont différentes. En revanche, si les sections de toutes les cellules d'extraction sont identiques, la vitesse de percolation telle que définie ci-avant est liée de façon biunivoque au débit.

Or, dans une installation d'extraction de café en phase liquide par percolation à travers des cellules d'extraction, toutes les cellules étant destinées à occuper successivement toutes les places d'un cycle d'extraction, elle présentent toutes la même géométrie et donc, en particulier, la même section.

Ainsi une réduction, respectivement une augmentation, du débit suppose réciproquement une réduction, respectivement une augmentation, de la vitesse de percolation.

Dans la suite de la description de la présente invention les vitesses de percolation seront exprimées en centimètres par minute et les débits en litres par minute.

Classiquement, la vitesse de percolation de l'extrait liquide à travers les cellules d'extraction est comprise entre 12 cm/min et 15 cm/min.

Dans le procédé selon la présente invention, après les cellules chaudes, l'extrait liquide sortant à une température supérieure à 140°C, la vitesse de percolation est abaissée. Grâce à cette réduction de la vitesse de percolation après les cellules chaudes, on observe une nette réduction de la fraction non soluble dans l'extrait final. Malgré tout il apparaît, si la vitesse de percolation est trop réduite après les cellules chaudes, que, le débit d'extrait liquide devenant insuffisant dans les cellules d'extraction, ceci pénalise l'épuisement qui peut devenir alors insuffisant dans le cadre d'un processus industriel où toutes les cellules sont identiques.

Pour pallier cet inconvénient, il peut être avantageux, après avoir réduit, en aval des cellules chaudes, la vitesse de percolation dans une ou plusieurs cellules d'extraction, de réguler le débit de l'extrait liquide en fonction de l'épuisement désiré mesuré dans l'extrait final.

Si les cellules ont toutes la même section, cela se traduit par une augmentation de la vitesse de percolation dans les cellules en aval de celles où la vitesse a été réduite. Pourtant, il ne faut en aucun cas mettre en parallèle cette augmentation de la vitesse avec la diminution de la vitesse réalisée précédemment.

En effet, alors que pour obtenir une réduction de la fraction non soluble dans l'extrait final il convient effectivement de diminuer la vitesse de percolation après les cellules chaudes, la diminution du débit n'étant qu'un moyen parmi d'autres pour y parvenir, l'épuisement dans les cellules d'extraction est fonction, entre autre, du rapport entre le volume de liquide percolant et la masse de café torréfié, indépendamment de la façon dont cette masse de café est disposée, en lit mince de large section ou en colonne épaisse de faible section.

Ainsi, un cycle d'extraction ayant une durée déterminée, le volume de liquide percolant est bien déterminé par le débit et non par la vitesse.

Les exemples numériques ci-après vont illustrer le procédé selon l'invention et mettre en évidence l'importance des paramètres choisis.

Dans une installation classique d'extraction de café en phase liquide, la vitesse de percolation dans les cellules d'extraction est de l'ordre de 15 cm/min, la fraction non soluble dans l'extrait final pouvant atteindre 3,3% et plus.

Le tableau ci-dessous, pour une installation comprenant, deux cellules chaudes, deux cellules intermédiaires où la vitesse de percolation est réduite, et deux cellules froides où le débit est régulé, la régulation s'effectuant en fait par augmentation de la vitesse, toutes les cellules ayant la même section, montre l'évolution de la fraction non soluble dans l'extrait final en fonction de la vitesse de percolation dans les cellules intermédiaires.

| Vitesse de percolation dans les cellules intermédiaires cm/min | Fraction non soluble dans l'extrait final % |
|---|---|
| 15,0 | 3,3 |
| 13,6 | 2,9 |
| 12,9 | 2,8 |
| 10,3 | 1,4 |
| 9,6 | 0,8 |
| 9,1 | 0,4 |

Il apparaît ainsi que, pour une vitesse de percolation de 10 cm/min, la fraction non soluble est de l'ordre de 1,2% ce qui est avantageux comme on le verra plus loin.

Par ailleurs, le tableau ci-dessous illustre l'influence du nombre de cellules intermédiaires sur la fraction non soluble dans l'extrait final, l'installation comportant par ailleurs deux cellules chaudes en amont et deux cellules froides en aval où la vitesse de percolation est augmentée.

| Nombre de cellules intermédiaires | Fraction non soluble dans l'extrait final % |
|---|---|
| 4 | 0,8 |
| 3 | 0,7 |
| 2 | 1,2 |
| 1 | 2,1 |

Enfin le tableau ci-dessous montre l'influence du débit dans les cellules froides sur l'épuisement mesuré dans l'extrait final.

| | Essai 1 | Essai 2 |
|---|---|---|
| Température dans les cellules chaudes | 180° C | 180° C |
| Débit dans les cellules chaudes | 24,8 l/min | 24,7 l/min |
| Débit dans les cellules froides | 33,0 l/min | 31,5 l/min |
| Température dans les cellules froides | 105° C | 105° C |
| Epuisement mesuré dans l'extrait final | 42,7% | 40,4% |

Il apparaît ainsi clairement que, toutes choses égales par ailleurs, l'épuisement est fonction du débit dans les cellules froides.

Sans vouloir être tenu par une explication du phénomène constaté, il semble que la réduction de la fraction non soluble dans l'extrait final soit due au fait que, la vitesse de percolation diminuant, au moins dans les cellules intermédiaires, celles-ci se comportent comme des filtres que retiennent les matières solides en suspension entraînées à partir des cellules chaudes.

Les matières solides, retenues dans ces cellules intermédiaires seraient ensuite soit hydrolysées, lorsque les cellules intermédiaires sont devenues les cellules chaudes, soit simplement évacuées, quand le marc contenu dans la cellule chaude la plus épuisée est éliminé.

Cet effet de filtration peut être mis en évidence en calculant l'épuisement réalisé par chaque cellule.

On observe ainsi que, pour les cellules intermédiaires, l'épuisement peut être négatif ce qui montre bien que des matières présentes dans l'extrait avant le passage dans les cellules intermédiaires ne sont plus présentes à la sortie de ces cellules et ont donc été fixées dans le lit de café.

Le tableau ci-dessous illustre ce phénomène pour une installation à six cellules dont deux cellules intermédiaires.

| Numéro de cellule | Epuisement réalisé dans la cellule (%) |
|---|---|
| 6 | 11,83 |
| 5 | 5,83 |
| 4 | -8,45 |
| 3 | -2,06 |
| 2 | 12,39 |
| 1 | 18,57 |

Pour la mise en oeuvre du procédé selon l'invention, selon le mode de réalisation préférentiel représenté à la figure unique, il est prévu, après deux cellules chaudes 1,2, des moyens 7 pour réduire la vitesse de percolation dans au moins une cellule 3 après la dernière cellule chaude 2.

Les moyens 7 pourront être constitués d'un évaporateur 7 qui, diminuant le volume de l'extrait liquide sortant de la cellule 2 et destiné à percoler à travers la cellule 3, entraînera une diminution du débit et donc de la vitesse dans la cellule 3.

Pour éviter que l'épuisement réalisé dans les cellules contenant le café le plus frais soit trop pénalisé par cette réduction de vitesse, et donc de débit, il est prévu que, en aval de la cellule 3, soit interposé entre deux cellules successives d'extraction, par exemple entre les cellules 4 et 5, un dispositif 8 d'augmentation du débit dans les cellules suivantes.

Le dispositif 8 peut être constitué d'une arrivée supplémentaire de liquide d'extraction, par exemple d'eau chaude qui, additionnée à l'extrait liquide venant de la cellule 4, augmente ainsi le volume de liquide percolant à travers les cellules 5 et 6. L'utilisation d'une arrivée d'eau chaude permet par ailleurs de réguler la température.

Grâce au procédé et au dispositif selon l'invention il est ainsi possible d'obtenir facilement un extrait final, à la sortie de la cellule 6, contenant le café torréfié le plus frais, qui présente une fraction non soluble inférieure à 1,2%.

Or, les différents essais ont montré que, pour un extrait final présentant une fraction non soluble inférieure à 1,2%, il suffit d'une simple opération de filtration, sans centrifugation ultérieure, pour obtenir un jus qui, après évaporation suivie d'une atomisation ou d'une lyophilisation, permet ensuite d'obtenir un café instantané en poudre qui se dissout dans l'eau chaude sans qu'apparaisse aucune matière en suspension.

**Revendications**

1. Procédé de production de café instantané soluble en poudre dans lequel un liquide d'extraction est amené à percoler à travers des cellules remplies de café torréfié moulu, l'extrait liquide final étant ensuite transformé en poudre, caractérisé en ce que, après des cellules chaudes contenant le café le plus épuisé, la vitesse de percolation de l'extrait liquide à travers des cellules d'extraction est réduite.

2. Procédé selon la revendication 1 caractérisé en ce que après la réduction de vitesse de percolation, en aval des cellules où cette réduction a lieu, le débit de percolation est régulé pour atteindre l'épuisement désiré.

3. Procédé selon la revendication 2 caractérisé en ce que la régulation du débit est réalisée par addition de liquide d'extraction au liquide sortant de la ou des cellules où la vitesse de percolation a été réduite.

4. Procédé selon la revendication 1 caractérisé en ce que l'épuisement réalisé dans au moins une cellule où la vitesse de percolation a été réduite est négatif.

5. Dispositif pour la mise en oeuvre du procédé selon l'une des revendications précédentes caractérisé en ce que, après les cellules chaudes (1,2) contenant le café le plus épuisé, sont prévus des moyens (7) pour réduire la vitesse de percolation dans au moins une cellule (3) en aval des dites cellules chaudes (1,2).

6. Dispositif selon la revendication 5 caractérisé en ce que les moyens (7) pour réduire la vitesse de percolation sont constitués par des moyens (7) de réduction du débit de l'extrait liquide percolant.

7. Dispositif selon la revendication 6 caractérisé en ce que les moyens (7) pour réduire le débit de l'extrait liquide percolant sont constitués par un évaporateur (7).

8. Dispositif selon la revendication 5 caractérisé en ce que, après au moins une cellule (3) où la vitesse de percolation a été réduite, sont prévus des moyens (8) pour réguler le débit de percolation dans les cellules contenant le café torréfié le plus frais en fonction de l'épuisement désiré.

9. Dispositif selon la revendication 8 caractérisé en ce que les moyens (8) pour réguler le débit de percolation sont constitués par une arrivée supplémentaire de liquide d'extraction.

10. Dispositif selon la revendication 9 caractérisé en ce que les moyens (8) pour réguler le débit de percolation sont constitués par une arrivée d'eau chaude.

Figure unique

# RAPPORT DE RECHERCHE EUROPEENNE

**EP 90 11 3716**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 347 074   (SOC. DES PRODUITS NESTLE) <br> * Page 4, essai Y,Z; page 2, ligne 36 - page 3, ligne 15; figure * <br> – – – | 1,4,5,6,7, | A 23 F 5/26 |
| X | FR-A-2 126 170   (GENERAL FOODS) <br> * Revendications 1,11; page 4, lignes 5-6; page 5, lignes 13-22 * <br> – – – | 1,5-7 | |
| X | EP-A-0 224 338   (GENERAL FOODS) <br> * Revendications 1,2,3; page 2, lignes 28-63; exemple 1; fig. * <br> – – – | 1,5-7 | |
| X | NL-A-6 714 821   (PROCTER & GAMBLE) <br> * Revendication 1; page 8, lignes 20-25 * <br> – – – | 1,5-7 | |
| A | FR-A-2 190 492   (GENERAL FOODS) <br> * Revendications 1,2; pages 5-6; figures 2-8 * <br> – – – – – | 3,8,9,10 | |

|  |  |  | DOMAINES TECHNIQUES RECHERCHES (Int. Cl.5) |
|---|---|---|---|
| | | | A 23 F |

Le présent rapport de recherche a été établi pour toutes les revendications

| Lieu de la recherche | Date d'achèvement de la recherche | Examinateur |
|---|---|---|
| La Haye | 15 mars 91 | DESMEDT G.R.A. |

CATEGORIE DES DOCUMENTS CITES
X : particulièrement pertinent à lui seul
Y : particulièrement pertinent en combinaison avec un
    autre document de la même catégorie
A : arrière-plan technologique
O : divulgation non-écrite
P : document intercalaire
T : théorie ou principe à la base de l'invention

E : document de brevet antérieur, mais publié à la
    date de dépôt ou après cette date
D : cité dans la demande
L : cité pour d'autres raisons
-----------------------------------------------------------------------------
& : membre de la même famille, document
    correspondant